# EUROPÄISCHE PATENTSCHRIFT

(11) **EP 1 037 779 B1**
(45) Veröffentlichungstag und Bekanntmachung des Hinweises auf die Patenterteilung: **29.06.2005**
(21) Anmeldenummer: 99948664.0
(22) Anmeldetag: 21.07.1999
(51) Int. Cl.: B60S 1/40

(54) **VORRICHTUNG ZUM VERBINDEN EINES WISCHBLATTS FÜR SCHEIBEN VON KRAFTFAHRZEUGEN MIT EINEM WISCHERARM**
DEVICE FOR CONNECTING A WIPER BLADE FOR WINDSHIELDS IN MOTOR VEHICLES TO A WIPER ARM
DISPOSITIF POUR RELIER UNE RACLETTE D'ESSUIE-GLACE DE VEHICULES AUTOMOBILES A UN BRAS D'ESSUIE-GLACE

(30) Priorität: 27.07.1998 DE 19833665
(43) Veröffentlichungstag der Anmeldung: 27.09.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/002250
(87) Internationale Veröffentlichungsnummer: WO 2000/006432

(56) Entgegenhaltungen:
- WO-A-99/00238
- DE-A- 19 729 865
- DE-U- 29 712 293
- US-A- 2 056 777
- US-A- 3 872 537
- US-A- 4 120 069

## Beschreibung

### Stand der Technik

Die Erfindung geht aus von einer Vorrichtung nach Anspruchs 1. Die WO-A-99/02382 (EP-A-923 470) stellt einen Stand der Technik nach Artikel 54(3) und (4) EPÜ dar und zeigt Vorrichtungen zum Verbinden eines Wischblatts für Scheiben von Kraftfahrzeugen mit einem am Kraftfahrzeug einendig geführten, angetriebenen Wischerarm, dessen freies Ende mit einem Tragelement für eine langgestreckte, gummielastische, an der Scheibe anlegbare Wischleiste gelenkig anschließbar ist, wobei als wischblattseitige Anschlußmittel aus den Längsseiten des Tragelements je ein Zapfen ragt, die gemeinsame Längsachse der beiden Zapfen quer zur Tragelementlängserstreckung in einer zur Scheibe parallelen Ebene liegt und jeder der beiden Zapfen in eine ihm zugeordnete, die wischerarmseitigen Anschlußmittel bildende Lagerausnehmung des Wischerarms greift, wobei jeder der Lagerzapfen über je einen randoffenen, in die ihm zugeordnete Lagerausnehmung mündenden Montagekanal einbringbar ist. Bei einer anderen bekannten Vorrichtung dieser Art (DE-OS 23 44 876) greifen die blattseitigen Gelenkzapfen nach der Montage des Wischblatts am Wischerarm in armseitige Löcher. Eine Aussage zum Montagevorgang wird dort nicht gemacht. Möglicherweise sind die beiden Zapfen durch die aus dem Block des Halters herausragenden Enden eines Bolzens gebildet, welcher nach dem Zusammenstecken der Anschlußteile eingesetzt wird, so daß die Bolzenenden in den armseitigen Löchern liegen. Eine derartige Verbindung erfordert einen erheblichen Montageaufwand sowohl bei der Erstmontage des Wischblatts am Wischerarm als auch beim später erforderlichen Wischblattaustausch.

### Vorteile der Erfindung

Bei der erfindungsgemäßen Vorrichtung mit den Merkmalen des Anspruchs 1 ist es möglich die Zapfen über die beiden ihnen zugeordneten Montagekanälen in ihre Lagerausnehmungen einzuführen wobei die Zapfenteile beim Passieren der Kanäle vorübergehend elastisch auslenken und in den Lagerausnehmungen in ihre Ausgangsposition selbsttätig zurückfedern. Zur Montage sind somit keine besonderen Elemente wie zum Beispiel Gelenkbolzen erforderlich. Auch die Demontage erfordert lediglich eine entgegen der Einführrichtung gerichtete Kraft, welche ein entsprechendes Auslenken der Zapfenteile zum Passieren der Montagekanäle bewirkt.

Bei einer ersten, besonders betriebssicheren Ausführungsform der Erfindung, die in erster Linie für Wischanlagen mit einem von der Scheibe wegklappbaren Wischerarm geeignet ist, sind die beiden je aus den Zapfenteilen gebildeten Zapfen mit jeweils zwei einander gegenüberliegenden, innerhalb einer gedachten Ringmantelfläche befindlichen, zur Scheibe ausgerichteten Anflachungen versehen wobei der Abstand zwischen den Zapfenteilen durch einen Schlitz gebildet ist, der sich zumindest bis zu einem aus einem elastischen Kunststoff gefertigten Träger für die einstückig mit diesem verbundenen Zapfen erstreckt und der zwischen den beiden Anflachungen angeordnet ist.

Dabei kann es von Vorteil sein, wenn die Montagekanäle sich im wesentlichen parallel zur Oberfläche der Scheibe erstrecken.

Für Wischanlagen mit einem von der Scheibe nur geringfügig abhebbaren Wischerarm - wie sie beispielsweise bei Anlagen mit unter einer Schürze der Karosserie befindlichen Ablagestellung des Wischblatts vorgesehen sind - ergibt sich eine einfach zu bewerkstelligende Verbindung zwischen Wischblatt und Wischerarm, wenn sich die Montagekanäle von den Lagerausnehmungen aus zur Oberfläche der Scheibe erstrecken.

Eine zweckmäßige Ausgestaltung der Erfindung sieht vor, daß der Abstand zwischen den Zapfenteilen durch einen Schlitz gebildet ist, der sich zumindest bis zu einem aus einem elastischen Kunststoff gefertigten Träger für die einstückig mit diesem verbundenen Zapfen erstreckt und der zur Oberfläche der Scheibe ausgerichtet ist.

Eine Erleichterung der Montage des Wischblatts am Wischerarm ergibt sich, wenn die jeweils einander zugewandten Seitenwänden der Montagekanäle von den Lagerausnehmungen aus divergieren.

Um die Bauhöhe des Wischblatts gering zu halten ist das Tragelement als bandartig langgestreckte, aus einem federelastischen Material bestehende Schiene ausgebildet, an welche die Wischleiste längsachsenparallel gehalten ist.

Weitere vorteilhafte Weiterbildungen und Ausgestaltungen der Erfindung sind in der nachfolgenden Beschreibung von in der dazugehörigen Zeichnung dargestellten Ausführungsbeispielen angegeben.

### Zeichnung

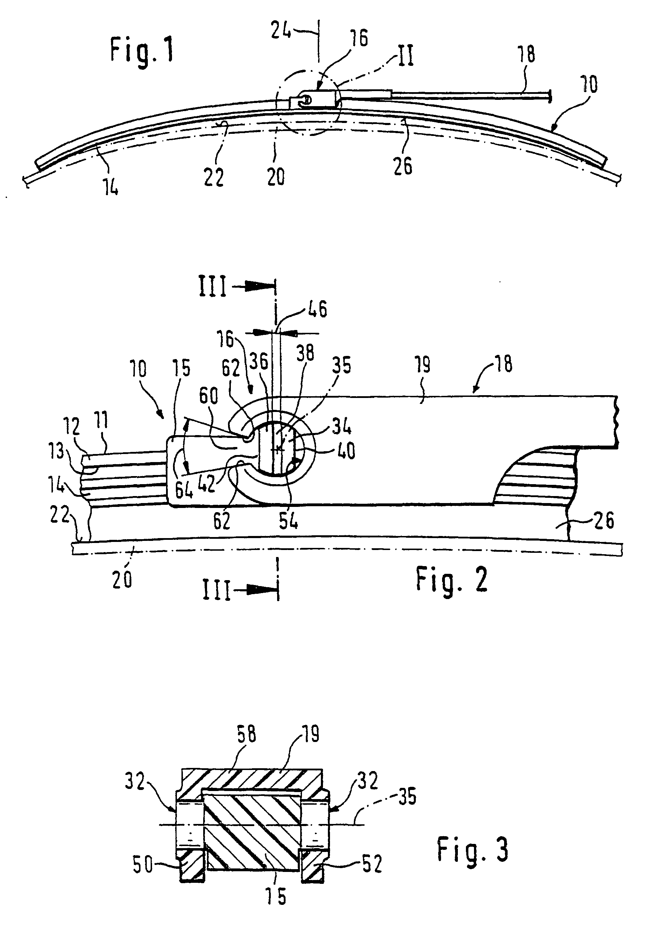

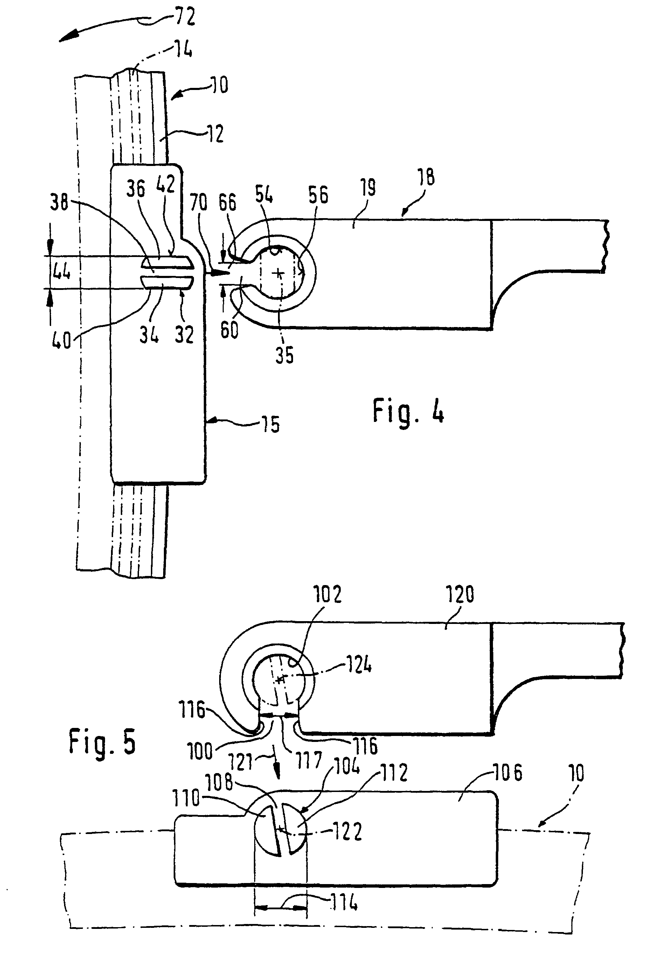

In der Zeichnung zeigen: Figur 1 eine Seitenansicht eines mit einer erfindungsgemäßen Verbindungsvorrichtung an einem Wischerarm angeschlossenen Wischblatts, Figur 2 eine vergrößerte Darstellung einer in Figur 1 mit II bezeichneten Einzelheit, Figur 3 eine Prinzipdarstellung einer Schnittfläche entlang der Linie III-III in Figur 2 durch die Verbindungsvorrichtung, Figur 4 die Verbindungsvorrichtung gemäß Figur 2 in einer Vormontageposition und Figur 5 eine andere Ausführungsform der erfindungsgemäßen Verbindungsvorrichtung in Vormontageposition dargestellt.

### Beschreibung der Ausführungbeispiele

Ein in Figur 1 gezeigtes Wischblatt 10 weist ein bandartig langgestrecktes, federelastisches Tragelement 12 auf (Figur 2), an dessen Unterseite 13 eine langgestreckte, gummielastische Wischleiste 14 längsachsenparallel befestigt ist. An der Oberseite 11 des als auch Federschiene zu bezeichnenden Tragelements 12 ist in dessen Mittelabschnitt das wischblattseitige Teil 15 einer Anschlußvorrichtung 16 angeordnet mit deren Hilfe das Wischblatt 10 gelenkig mit einem angetriebenen Wischerarm 18 lösbar verbunden werden kann. Dazu ist der Wischerarm 18 an seinem freien Ende mit dem wischerarmseitigen Teil 19 der Anschlußvorrichtung 16 versehen. Der Wischerarm 18 ist in Richtung des Pfeiles 24 zur zu wischenden Scheibe 20 - beispielsweise die Windschutzscheibe eines Kraftfahrzeuges - belastet, deren Oberfläche in Figur 2 durch eine Linie 22 angedeutet ist. Da die Linie 22 die stärkste Krümmung der Scheibenoberfläche darstellen soll ist klar ersichtlich, daß die Krümmung des mit seinen beiden Enden an der Scheibe anliegenden, noch unbelasten Wischblatt stärker ist als die maximale Scheibenkrümmung (Figur 1). Unter dem Anpressdruck (Pfeil 24) legt sich das Wischblatt 10 mit seiner Wischlippe 26 über seine gesamte Länge an der Scheibenoberfläche 22 an. Dabei baut sich im aus Metall gefertigten, federelastischen Tragelement 12 eine Spannung auf, welche für eine ordnungsgemäße Anlage der Wischleiste 14 beziehungsweise der Wischlippe 26 über deren gesamte Länge an der Scheibe 20 sowie für eine gleichmäßige Verteilung des Anpressdrucks (Pfeil 24) sorgt. Weil die in aller Regel sphärisch gekrümmte Scheibe nicht ein Abschnitt einer Kugeloberfläche darstellt, muß sich das Wischblatt 10 gegenüber dem Wischerarm 18 während seiner Wischbewegung ständig der jeweiligen Lage der Scheibenoberfläche anpassen können. Deshalb ist die Anschlußvorrichtung 16 gleichzeitig als Gelenkverbindung zwischen Wischblatt und Wischerarm ausgebildet.

Im Folgenden soll eine erste Ausführungsform der Verbindung zwischen dem Tragelement 12 und dem Wischerarm 18 anhand der Figuren 1 bis 4 näher erläutert werden. Zur Anschlußvorrichtung 16 gehören wie schon erwähnt die wischerarmseitigen und wischblattseitigen Kupplungsteile 15 und 19. Die wischblattseitigen Kupplungsmittel sind beim Ausführungsbeispiel an einem zum Tragelement gehörenden Kupplungsteil 15 ausgebildet, welches fest mit dem Tragelement 12 verbunden ist. An dem aus einem elastischen Kunststoff gefertigten Kupplungsteil 15 sind aneinander gegenüberliegende und sich von einander weg erstreckende Zapfen 32 angeordnet, an denen einmal wischerarmseitige Kupplungsmittel angreifen und die zum anderen als Lagerzapfen für eine gelenkige Verbindung zwischen Wischerarm 18 und dem Wischblatt 10 sorgen. Dazu weisen die Zapfen 32 eine gemeinsame Längs- oder Schwenkachse 35 auf, die sich im wesentlichen in Verschieberichtung des Wischblatts 10 während des Wischbetriebs und somit parallel zur Scheibenoberfläche 22 erstreckt. Die Schwenkachse 35 erstreckt sich quer zur Längsachse des langgestreckten Wischblatts 10, welches während des Wischbetriebs quer zur seiner Längserstreckung über die zu wischende Scheibe 20 verschoben wird. Wie insbesondere die Figuren 2 bis 4 zeigen sind die beiden Zapfen 32 beim Ausführungsbeispiel aus zwei Zapfenteilen 34 und 36 gebildet, die mit einem durch einen Schlitz 38 gebildeten Abstand von einander angeordnet sind. Jeder der beiden Zapfen 32 ist mit jeweils zwei einander gegenüberliegenden, innerhalb einer gedachten Ringmantelfläche befindlichen, zur Scheibe 22 ausgerichteten Anflachungen 40 und 42 versehen zwischen denen sich der Schlitz 38 befindet. Dieser erstreckt sich bis zu dem als Träger für die beiden Zapfen 32 dienenden Kupplungsteil 15 oder auch bis in das Kupplungsteil 15 hinein. Die beiden Anflachungen 40 und 42, von denen jede an einem der beiden Zapfenteile 34 und 36 angeordnet ist, befinden sich in einem Abstand 44 (Figur 4) voneinander. Die Breite des Schlitzes 38 - welche den Abstand zwischen den beiden Zapfenteilen 34 und 36 ausmacht - ist in Figur 2 mit der Bezugszahl 46 versehen worden.

Das wischerarmseitige, zur Anschlußvorrichtung 16 gehörende Kupplungsteil 19 ist aus einem vergleichsweise unnachgiebigen, schleißfesten, Material, beispielsweise einem Kunststoff hergestellt und mit dem Wischerarm 18 fest verbunden, so daß es praktisch zu diesem gehört. Es hat, wie Figur 3 zeigt, einen im wesentlichen U-förmigen Querschnitt. Seine beiden U-Schenkel 50 und 52 sind jeweils mit einer Bohrung 54 versehen, die miteinander fluchten und deren gemeinsame Achse identisch ist mit der gemeinsamen Achse 35 der Lagerzapfen 32, wenn das Wischblatt 10 mit dem Wischerarm 18 verbunden ist. Die Bohrungen 54 bilden somit die wischerarmseitigen Anschluß- und Lagermittel für die wischblattseitigen Anschluß- und Lagermittel 32. Die Mantelflächen 56 der Bohrungen 54 bilden Gleitlagerflächen, welche mit den äußeren Mantelflächen der Lagerzapfen 32 zusammen arbeiten. Die Ringmantelfläche 56 bildet somit auch die Ringmantelfläche innerhalb der die zur Scheibe ausgerichteten Anflachungen 40 und 42 der Lagerzapfen 32 angeordnet sind. Weiter ist aus Figur 3 ersichtlich, daß die U-Schenkel 50 und 52 des Kupplungsteils 19 in Montagestellung der Vorrichtung beiden voneinander abgewandten Seitenflächen des Kupplungsteils 15 übergreifen. Die die beiden U-Schenkel 50 und 52 verbindende U-Basis 58 bildet eine Abdeckplatte, welche die Zapfenlager gegen Eindringen von Straßenschmutz weitgehend schützt. Die Lagerbohrungen 54 sind über jeweils einen Montagekanal 60 randoffen, so daß über die Montagekanäle 60 die Lagerzapfen 32 in ihrer Lagerbohrungen 54 eingebracht werden können. Wie aus Figur 2 ersichtlich ist divergieren die einander zugewandten Seitenflächen 62 um eine spitzen Winkel 64 zueinander. Die engste Stelle der Montagekanäle ist aus Figur 4 ersichtlich und ist dort mit der Bezugszahl 66 versehen worden. Dieses Maß ist kleiner als das Maß 44, welches den Abstand der beiden Anflachungen 40 und 44 angibt. Die Breite 46 der Schlitze 38 ist jedoch größer als die Differenz zwischen dem Maß 44 und dem Maß 66. Wie Figur 2 zeigt, erstrecken sich die Montagekanäle 60 im wesentlichen parallel zur Oberfläche 22 der Scheibe 20.

Die Arbeitsschritte zum Anschließen des Wischblatts 10 am Wischerarm 18 sollen nun anhand von Figur 4 erläutert werden. Das Wischblatt 10 ist zunächst in eine Montageposition gegenüber dem von der Scheibe weggeklappten Wischerarm 18 zu bringen, die in Figur 4 dargestellt ist. Danach wird das Wischblatt in Richtung des Pfeiles 70 verschoben, wobei die Lagerzapfen 32 in die Montagekanäle 60 gelangen. Die trichterförmig zueinander verlaufenden Seitenwände 62 Montagekanäle fangen dabei die Zapfen 32 und führen diese sicher zur Engstelle 60 der Montagekanäle. Unter erhöhtem Druck in Richtung des Pfeiles 70 lenken nun die beiden Zapfenteile 34 und 36 aus der in Figur 4 gezeigten Stellung elastisch aus, wobei sich die Breite 46 der Schlitze 38 soweit verringert, bis das Maß 44 dem Maß 66 entspricht und die Zapfen 32 in ihrer Lagerbohrungen 54 gelangen, wo sie wieder in ihre Ausgangsstellung zurückfedern. Danach wird das Wischblatt in Richtung des Pfeiles 72 in Figur 4 geschwenkt, so daß es in seine in Figur 2 dargestellte Betriebsposition gelangt, in welcher es nun sicher, jedoch um die Achse 35 pendelbar gehalten ist. Diese Betriebsposition der Zapfen 32 in ihren Lagerbohrungen 54 ist in Figur 4 strichpunktiert angegeben.

Bei anderen, in Figur 5 dargestellten Ausführungsform der erfindungsgemäßen Verbindungsvorrichtung sind abweichend von den eben geschilderten Ausführungsbeispiel die Montagekanäle 100 von den Lagerausnehmungen 102 zur zu wischenden Scheibe ausgerichtet. Die beiden Lagerzapfen 104 sind ebenso wie bei der Ausführungsform gemäß den Figuren 2 bis 4 bis zum Kupplungsteil 106 geschlitzt, wobei sich die Schlitze 108 ebenfalls zur Oberfläche der Scheibe erstrecken oder in das Kupplungsteil 106 hineingeführt sind. Es ergeben sich so zwei mit Abstand voneinander befindliche Zapfenteile 110, 112 die gemeinsam jeweils die beiden Zapfen 104 mit einem Zapfendurchmesser 114 bilden. Die einander zugewandten Seitenwangen 116 der Montagekanäle 100 befinden sich mit einem Abstand 118 voneinander der kleiner ist als die Durchmesser 114 der Zapfen 104. Die Breite der Schlitze 108 ist etwas größer als die Differenz zwischen dem Zapfendurchmesser 114 und der Breite 117 der Montagekanäle 100. Auch bei dieser Ausführungsform ist das Kupplungsteil 106 sowie die einstückig mit diesem verbundenen Gelenkzapfen 104 aus einem elastischen Material gefertigt, während das wischerarmseitige Kupplungsteil 120 aus einem schleißfesten unnachgiebigen Material hergestellt ist.

Zum Verbinden des Wischblatts 10 mit dem Wischerarm, beziehungsweise dem mit diesem festverbundenen Kupplungsteil 120 muß der Wischerarm lediglich um ein Maß von der Scheibe abgehoben werden, welches das Einbringen des Wischblatts zwischen Wischerarm und Scheibe zuläßt. Danach wird der Wischerarm in Richtung des Pfeiles 121 bewegt (Figur 5), wobei das Kupplungsteil 120 das wischblattseitige Vorrichtungsteil 106 übergreifend mit den Mündungen der Montagekanäle 100 auf Zapfen 104 aufgesetzt wird. Durch einen geringfügigen Druck in Richtung des Pfeiles 121 lenken die Zapfenteile 110, 112 der Gelenkzapfen 104 aufeinander zu aus, bis das Maß 114 der Breite 117 der Montagekanäle 100 entspricht. Danach gelangen die Zapfen 104 in ihre Lagerbohrungen 102 - wie in Figur 5 strichpunktiert dargestellt - wobei sich dann die gemeinsamen Zapfenachsen 122 mit den gemeinsamen Bohrungsachsen 124 decken, so daß eine Schwingbewegung des Wischblatts um diese Achse möglich ist. Natürlich können auch bei dieser Ausführung die Seitenwangen 116 zur Scheibe hin divergieren.

Die Gelenkzapfen 32 beziehungsweise 104 bilden also Anschlußmittel und zugleich Lagerelemente zwischen Wischerarm 18 und Wischblatt 10. Beiden Ausführungsbeispielen ist gemeinsam, daß jeder der beiden Zapfen 32 beziehungsweise 104 aus wenigstens zwei mit Abstand 46 aus wenigstens zwei mit Abstand voneinander angeordneten, elastisch auslenkbaren Zapfenteilen 34, 36 beziehungsweise 110, 112 gebildet ist und daß die Breite 66 beziehungsweise 117 eines jeden Montagekanals 60 beziehungsweise 100 kleiner ist als das kleinste Zapfenmaß 44 beziehungsweise 114 quer zur Zapfenlängsachse 35 gemessen. Dabei ist das kleinste Zapfenmaß dort gemessen, wo die Zapfen 32 bzw. 104 in Montageposition an den Montagekanalwänden 62 bzw. 116 entlang gleiten.

## Patentansprüche

1. Vorrichtungen zum Verbinden eines Wischblatts (10) für Scheiben (20) von Kraftfahrzeugen mit einem am Kraftfahrzeug einendig geführten, angetriebenen Wischerarm (18), dessen freies Ende mit einem Tragelement (12) für eine langgestreckte, gummielastische, an der Scheibe anlegbare Wischleiste (14) gelenkig anschließbar ist wobei als wischblattseitige Anschlußmittel aus den Längsseiten des Tragelements je ein Zapfen ragt, die gemeinsame Längsachse (34) der beiden Zapfen (32, 104) quer zur Tragelementlängserstreckung in einer zur Scheibe parallelen Ebene liegt und jeder der beiden Zapfen (32, 104) in eine ihm zugeordnete, die wischerarmseitigen Anschlußmittel bildende Lagerausnehmung (54, 102) des Wischerarms (18) greift, wobei jeder der Lagerzapfen (32, 104) über je einen randoffenen, in die ihm zugeordnete Lagerausnehmung mündenden Montagekanal (60, 100) einbringbar ist, und jeder der beiden Zapfen (32, 104) aus wenigstens zwei mit Abstand voneinander angeordneten, elastisch auslenkbaren Zapfenteilen (34, 36, 110, 112) gebildet ist und die Breite (66) eines jeden Montagekanals (60, 100) kleiner ist als das kleinste Zapfenmaß (44, 114) quer zur Zapfenlängsachse (35) gemessen.

2. Vorrichtung nach Anspruch 1, **dadurch gekennzeichnet, daß** die beiden je aus den Zapfenteilen (34, 36) gebildeten Zapfen (32) mit jeweils zwei einander gegenüberliegenden, innerhalb einer gedachten Ringmantelfläche befindlichen, zur Scheibe ausgerichteten Anflachungen (40, 42) versehen sind und daß der Abstand (46) zwischen den beiden Zapfenteilen (34, 36) durch einen Schlitz (38) gebildet ist, der sich zumindest bis zu einem aus einem elastischen Kunststoff gefertigten Kupplungsteil (15) für die einstückig mit diesem verbundenen Zapfen (32) erstreckt und der zwischen den beiden Anflachungen (40, 42) angeordnet ist.

3. Vorrichtung nach einem der Ansprüche 1 oder 2, **dadurch gekennzeichnet, daß** sich die Montagekanäle (60) im wesentlichen parallel zur Oberfläche (22) der Scheibe (20) erstrecken.

4. Vorrichtung nach Anspruch 1, **dadurch gekennzeichnet, daß** sich die Montagekanäle (100) von den Lagerausnehmungen (102) aus zur Oberfläche (22) der Scheibe (20) erstrecken.

5. Vorrichtung nach Anspruch 4, **dadurch gekennzeichnet, daß** der Abstand zwischen den Zapfenteilen (110 112) durch einen Schlitz (108) gebildet ist, der sich zumindest bis zu einem aus einem elastischen Kunststoff gefertigten Kupplungsteil (106) für die einstückig mit diesem verbundenen Zapfen (104) erstreckt und der zur Oberfläche der Scheibe weisend ausgerichtet ist.

6. Vorrichtung nach einem der Ansprüche 1 bis 5, **dadurch gekennzeichnet, daß** die jeweils einander zugewandten Seitenwände der Montagekanäle (60 bzw. 100) von den Lagerausnehmungen (54 bzw. 102) aus divergieren.

7. Vorrichtung nach einem der Ansprüche 1 bis 6, **dadurch gekennzeichnet, daß** das Tragelement (12) als bandartig langgestreckte, aus einem federelastischen Material bestehende Schiene ausgebildet ist, an welcher die Wischleiste (14) längsachsenparallel gehalten ist.

## Claims

1. Device for connecting a wiper blade (10) for windscreens (20) in motor vehicles to a driven wiper arm (18), which is guided at one end on the motor vehicle and the free end of which can be connected in an articulated manner to a supporting element (12) for an elongate, rubber-elastic wiper strip (14) which can placed against the windscreen, a respective pin protruding out of the longitudinal sides of the supporting element as the connecting means on the wiper-blade side, the common longitudinal axis (34) of the two pins (32, 104) being situated, transversely with respect to the longitudinal extent of the supporting element, in a plane parallel to the windscreen, and each of the two pins (32, 104) reaching into a bearing recess (54, 102) of the wiper arm (18), which bearing recess is assigned to the said pin and forms the connecting means on the wiper-arm side, it being possible for each of the bearing pins (32, 104) to be inserted via a respective installation channel (60, 100), which is open at the edge and leads into the bearing recess assigned to the said bearing pin, and each of the two pins (32, 104) being formed from at least two elastically deflectable pin parts (34, 36, 110, 112) which are arranged at a distance from each other, and the width (66) of each installation channel (60, 100) being smaller than the smallest pin size (44, 114) as measured transversely with respect to the longitudinal axis (35) of the pin.

2. Device according to Claim 1, **characterized in that** the two pins (32), which are each formed from the pin parts (34, 36), are provided with in each case two mutually opposite flattened sections (40, 42) which are situated within an imaginary annular circumferential surface and are oriented towards the windscreen, and **in that** the distance (46) between the two pin parts (34, 36) is formed by a slot (38) which extends at least as far as a coupling part (15), which is manufactured from a flexible plastic, for the pins (32) connected integrally to the latter, and which is arranged between the two flattened sections (40, 42).

3. Device according to either of Claims 1 and 2, **characterized in that** the installation channels (60) extend essentially parallel to the surface (22) of the windscreen (20).

4. Device according to Claim 1, **characterized in that** the installation channels (100) extend from the bearing recesses (102) to the surface (22) of the windscreen (20).

5. Device according to Claim 4, **characterized in that** the distance between the pin parts (110, 112) is formed by a slot (108) which extends at least as far as a coupling part (106), which is manufactured from a flexible plastic, for the pins (104) connected integrally to the latter, and which is oriented pointing towards the surface of the windscreen.

6. Device according to one of Claims 1 to 5, **characterized in that** the side walls, which face one another in each case, of the installation channels (60 or 100) diverge from the bearing recesses (54 or 102).

7. Device according to one of Claims 1 to 6, **characterized in that** the supporting element (12) is designed as a rail which is elongate in the manner of a band, consists of a spring-elastic material and on which the wiper strip (14) is held parallel to the longitudinal axis.

## Revendications

1. Dispositif pour relier une raclette d'essuie-glace (10) pour vitre (20) de véhicule automobile à un bras d'essuie-glace (18) qui est entraîné sur le véhicule en étant guidé par une extrémité, dans lequel :
- l'extrémité libre du bras d'essuie-glace (18) peut être raccordée de manière articulée à un élément porteur (12) d'une lame d'essuyage (14) allongée, élastique comme du caoutchouc et pouvant être appliquée sur la vitre,
- les moyens de raccordement du bras d'essuie-glace du côté de la vitre, sont constitués par deux pivots (32, 104) issus des côtés longitudinaux de l'élément porteur et présentant un axe longitudinal commun (34) transversal à la direction longitudinale de l'élément porteur et qui se trouve dans un plan parallèle à la vitre,
- chacun des deux pivots (32, 104) est engagé dans un évidement de palier (54, 102) qui lui est associé dans le bras d'essuie-glace (18) et qui constitue le moyen de raccordement du côté du bras d'essuie-glace,
- chacun des deux pivots (32, 104) peut être engagé dans un canal de montage (60, 100) débouchant dans l'évidement de palier qui lui est associé et est constitué d'au moins deux parties de pivot (34, 36, 110, 112) espacées l'une de l'autre et pouvant être déviées élastiquement, et
- la largeur (66) de chaque canal de montage (60, 100) est inférieure à la plus petite dimension (44, 114) du pivot correspondant mesurée perpendiculairement à l'axe longitudinal (35) des pivots.

2. Dispositif selon la revendication 1,
**caractérisé en ce que**
les deux pivots (32), constitués chacun des parties de pivot (34, 36), présentent chacun deux plats (40, 42) dirigés vers la vitre et situés face à face à l'intérieur d'une enveloppe annulaire virtuelle, la distance (46) séparant les deux parties de pivot (34, 36) étant constituée par une fente (38) qui s'étend au moins jusqu'à une partie d'accouplement (15) en matière plastique élastique pour le pivot (32) qui est monobloc avec elle, la fente se trouvant entre les deux plats (40, 42).

3. Dispositif selon la revendication 1 ou 2,
**caractérisé en ce que**
les canaux de montage (60) sont essentiellement parallèles à la surface (22) de la vitre (20).

4. Dispositif selon la revendication 1,
**caractérisé en ce que**
les canaux de montage (100) vont des évidements de palier (102) à la surface (22) de la vitre (20).

5. Dispositif selon la revendication 4,
**caractérisé en ce que**
la distance séparant les deux parties de pivot (110, 112) est constituée par une fente (108) qui s'étend au moins jusqu'à une partie d'accouplement (106) en matière plastique élastique pour le pivot (104) qui est monobloc avec elle, la fente étant dirigée vers la surface de la vitre.

6. Dispositif selon une des revendications 1 à 5,
**caractérisé en ce que**
les parois latérales se faisant face dans les canaux de montage (60, 100) partent en divergeant des évidements de palier (54, 102) correspondants.

7. Dispositif selon une des revendications 1 à 6,
**caractérisé en ce que**
l'élément porteur (12) est constitué par un rail en forme de ruban allongé fait d'un matériau élastique, sur lequel la lame d'essuyage (14) est maintenue parallèlement à l'axe longitudinal.
